Europäisches Patentamt

**European Patent Office**

**Office européen des brevets**

(19)

(11) Veröffentlichungsnummer: **0 003 346**
**B1**

(12) **EUROPÄISCHE PATENTSCHRIFT**

(45) Veröffentlichungstag der Patentschrift:
04.11.81

(21) Anmeldenummer: **79100188.6**

(22) Anmeldetag: **23.01.79**

(51) Int. Cl.³: **G 11 B 5/84,** G 11 B 23/50,
B 29 D 7/22

(54) **Vorrichtung zum Glätten der Oberfläche von Schichtaufzeichnungsträgern.**

(30) Priorität: **30.01.78 DE 2803914**

(43) Veröffentlichungstag der Anmeldung:
**08.08.79 Patentblatt 79/16**

(45) Bekanntmachung des Hinweises auf die Patenterteilung:
**04.11.81 Patentblatt 81/44**

(84) Benannte Vertragsstaaten:
**DE FR GB IT**

(56) Entgegenhaltungen:
**DE-A-1 449 435**
**DE-A-2 416 419**
**DE-U-7 801 442**
**FR-A-1 477 073**
**FR-A-2 216 639**
**US-A-2 591 121**
**US-A-2 905 767**
**US-A-3 475 782**
**US-A-3 616 478**
**IBM TECHNICAL DISCLOSURE BULLETIN, Vol.**
**15, Nr. 2, Juli 1972, 647/648, New York, USA,**
**A. J. BOLOGNA et al.: »Improving signal output in**
**recording media«**

(73) Patentinhaber: **BASF Aktiengesellschaft,**
**Carl-Bosch-Strasse 38, D-6700 Ludwigshafen (DE)**

(72) Erfinder: **Schoettle, Klaus, Ladenburger Strasse 70,**
**D-6900 Heidelberg (DE)**
Erfinder: **Muenzner, Wulf, Dr., Lorscher Ring 10,**
**D-6710 Frankenthal (DE)**
Erfinder: **Lechner, Hilmar, Comeniusstrasse 22,**
**D-6700 Ludwigshafen (DE)**
Erfinder: **Woeppel, Dieter, Goethestrasse 6,**
**D-6701 Waldsee (DE)**
Erfinder: **Gliniorz, Lothar, Carl-Bosch-Ring 24,**
**D-6710 Frankenthal (DE)**

Vorrichtung zum Glätten der Oberfläche von Schichtaufzeichnungsträgern

Die Erfindung betrifft eine Vorrichtung zum Glätten der Oberfläche von magnetischen Aufzeichnungsträgern mit mehreren, aufeinanderfolgenden Oberflächenbehandlungen in einem Arbeitsgang.

Bei Magnetbändern, insbesondere bei solchen für Aufzeichnung und Wiedergabe von Videosignalen, werden extrem glatte und ebene Oberflächen der magnetischen Schicht verlangt. Oberflächenrauhigkeiten und -welligkeiten des Bandes verursachen bei den in direktem Kontakt mit der Magnetschicht stehenden Aufzeichnungs- bzw. Wiedergabeköpfen Abstandseffekte, die sich als eine Amplitudenmodulation oder Pegelschwankung der aufgezeichneten bzw. wiedergegebenen Signale auswirkt. Besonders störend sind die Effekte bei der Aufzeichnung bzw. Wiedergabe von Video-Signalen, da hier mit sehr schmalen Magnetkopfspalten bis unter 0,3 µm und sehr kleinen Signal-Wellenlängen bis unter 0,8 µm gearbeitet wird. Ist die Abstandsänderung sinusförmig, so verursacht sie bei Aufzeichnung einer diskreten Frequenz eine Amplitudenmodulation. Ändert sich der Abstand nach einer statistischen Verteilung, gemäß der statistischen Verteilung der Bandoberflächenunebenheiten, so ergibt sich ein Signalrauschen als zusätzliche Amplitudenmodulation.

Die Ursachen für solche störenden Unregelmäßigkeiten der Schichtoberfläche sind bekanntlich Unebenheiten oder Fehler der Trägerfolie, z. B. durch anorganische Füllstoffe, die wegen der besseren Wickeleigenschaften und Handhabung der Folienblöcke häufig von den Folienherstellern in das Trägermaterial eingearbeitet werden. Das mikroskopische Erscheinungsbild solcher Folienoberflächen ist derart, daß in einer an sich ebenen und glatten Oberfläche im Abstand von einigen Mikron einzelne Erhebungen auftreten, die durch bis zu 0,3 µm über die mittlere Folienoberfläche hervorstehende, relativ scharfe Füllstoffpartikel gebildet werden. Diese Erhebungen werden bei dünnen Magnetschichten unter 5 µm, wie sie bei Videobändern üblich sind, in nur sehr beschränktem Maße überdeckt und eingeebnet, so daß sie häufig bis zur Magnetschichtoberfläche durchschlagen. Bei Magnetschichtdicken unter 2 µm sind Folienunebenheiten oder -fehler fast immer auch auf der Magnetschichtoberfläche sichtbar.

Weitere Ursachen für Schichtunebenheiten sind Fehler bei der Beschichtung z. B. streifige oder wellige Schicht durch Störungen am Beschichtungsgerät oder durch Schwingungen im Folientransportsystem, hervorstehende agglomerierte Magnetpartikel oder Staubpartikel, die in die Schicht eingebettet sind.

Zusätzlich können beim üblichen Satinieren oder Kalandrieren der Magnetbänder, bei dem, wie in der FR-A-2 216 639 gezeigt, die Magnetschicht nach ihrem Auftragen auf die Folienbahn verdichtet und geglättet wird, Fremdpartikel oder Staub eingewalzt werden oder lokale Drucküberhöhungen durch Unebenheiten oder harte Einschlüsse in den Papierwalzen auftreten, die ihrerseits lokale Prägungen wie in der Magnetschicht hinterlassen können.

Außerdem wurde festgestellt, daß beim Kalandrieren der beschichteten Folienbahn mit obengenannten Magnetschicht- oder Folienfehlern durch plastische Verdichtung der Magnetschicht unter normalen Druckbelastungen (maximal 3000 N/cm Liniendruck) nur ein gewisser Teil — vor allem die kleineren Fehler — so weit eingeebnet werden kann, daß sie nicht mehr stören. Die größeren und harten Erhebungen, Einschlüsse oder Fehlerstellen erfahren teilweise eine elastische Verformung, die sich nach Verlassen des Kalanderdruckspaltes wieder zurückbildet. Es ist auch möglich, daß sich die harten Einschlüsse oder Erhebungen im Band in die elastische Kalanderwalze eindrücken und dort zumindest mehrere Umläufe lang oder für immer bleibende Eindrücke verursachen, die ihrerseits wiederum die mit ihnen in Kontakt kommenden nachfolgenden Bahnstellen durch fehlende oder verminderten Druck schlechter kalandrieren.

Eine andere Möglichkeit, die Oberflächeneigenschaften von bandförmigen Aufzeichnungsschichten zu verbessern, bestand bisher darin, daß, wie in der DE-OS 2 611 032 bzw. in IBM Technical Disclosure Bulletin, Vol. 15, Nr. 2, Juli 1972, S. 647 und 648, vorgeschlagen, der Schichtträger über eine elastische Stützwalze geführt und die Schichtoberfläche mit Hilfe eines keramischen Zylinders bzw. eines Schleifbandes geschliffen wird.

In der praktischen Anwendung dieser Schleifmittel hat sich gezeigt, daß die aus der Oberfläche hervortretenden Schichtteile zwar ausreichend abgetragen werden, die Oberflächenrauhigkeit selbst jedoch zunimmt und die Oberfläche häufiger Kratzer aufweist, da die Keramikzylinder nur schwer kontinuierlich von Schleifstaub zu reinigen sind. Eine wirkungsvolle Reinigung ist nur bei unterbrochenem Schleifprozeß möglich.

Aufgabe der Erfindung ist es, eine Vorrichtung zu entwickeln, durch die die Oberfläche von Schichtaufzeichnungsträgern weitgehend von Unregelmäßigkeiten befreit werden kann.

Die erfindungsgemäße Lösung der Aufgabe ist eine Vorrichtung, die besteht aus:

a) einer Schleifvorrichtung, bestehend aus einer drehbar gelagerten Stützwalze für die Trägerbahn, einem darüber angeordneten Schleifmittel sowie aus Umlenkrollen und Einrichtungen zum fortlaufenden Bewegen der Trägerbahn und des Schleifmittels in zueinander entgegengesetzten Richtungen,

b) einer an die Schleifvorrichtung sich anschließenden Reinigungseinrichtung, bestehend aus einem umspulbaren Faservliesband und mindestens einem Umlenkkörper zum Herstellen der Oberflächenberührung zwischen Trägerbahn und Faservliesband,

c) einer an die Reinigungseinrichtung sich anschließenden Kalanderwalzenanordnung mit mindestens einem Walzenspalt für die geschliffene und vom Schleifstaub befreite Trägerbahn.

In einer vorteilhaften Ausführungsform der Vorrichtung ist das Schleifmittel ein endlos geführtes Schleifband, das mittels zweier zur Stützwalze parallel und symmetrisch angeordneter und in einem Rahmen drehbar gehaltener Andruckrollen an die auf der Stützwalze abgestützte Schichtoberfläche andrückbar ist. Ferner erstreckt sich unmittelbar über den beiden Oberflächen des Schleifbandes über dessen gesamte Breite mindestens ein Luftspalt magnetischer Pole.

Es ist ferner vorteilhaft, den Walzenmantel der Stützwalze in ihrer gesamten Breite mit einer Bürstenanordnung in Berührung zu bringen und den Bürstengrund mit einer Unterdruckkammer zu verbinden.

Eine andere Ausführungsform der erfindungsgemäßen Vorrichtung sieht vor, daß das Schleifmittel eine Rolle ist, die in Form einer rotationssymmetrischen Bürste mit Borsten bzw. Lamellen ausgestattet ist, wobei die Rolle von einem Gehäuse umgeben ist, das zur Erzeugung eines geführten Luftstromes mit mindestens einem Einlaß und mindestens einem Auslaß versehen ist.

Es ist günstig, den Einlaß für den Luftstrom in Bewegungsrichtung der Trägerbahn nach der Kontaktstelle mit der Rolle unmittelbar an der Oberfläche der Stützwalze vorbeizuführen.

Die Besonderheit der Erfindung besteht darin, daß die Oberfläche der Magnetschicht nach deren Auftrag auf die Folienbahn durch gleichmäßiges Abschleifen hervorstehender Schichtteile geebnet und danach gereinigt wird und anschließend die Folienbahn zum Glätten und Verdichten der Schicht durch eine Kalanderwalzenanordnung geführt wird.

Es ist damit erreicht, daß die noch unverdichtete Magnetschicht und die noch rauhe Oberfläche einem Abschleifen weniger Widerstand entgegensetzt als eine durch Kalandrieren verdichtete Schicht. Eine durch Abschleifen eingeebnete Schicht benötigt beim nachfolgenden Kalandrieren einen geringeren Kalandrierdruck als eine Schicht mit Erhebungen, da für gleiche Endoberflächenrauhigkeiten die elastischen Kalanderwalzen im Mittelwert durch die fehlenden Spitzen weniger tief eingedrückt werden müssen. Die Druckverteilung im Kalanderspalt wird gleichmäßiger. Ebenso wird eine größere Ebenheit der Schichtoberfläche erzielt, wobei die Gefahr lokaler Verprägungen beseitigt oder zumindest stark vermindert ist. Die erfindungsgemäße Vorrichtung verbessert somit die Kalandrierwirkung herkömmlicher Kalander wesentlich.

Ein weiterer Vorteil ist darin zu sehen, daß eventuelle, z. B. beim Abschleifen der Schicht entstehende Kratzer, durch das nachfolgende Verdichten im Kalander meistens ganz oder so weit beseitigt oder vermindert werden, daß sie in die Größenordnung der Oberflächenrauhigkeit kommen und somit die Aufzeichnung bzw. Wiedergabe von z. B. Videosignalen nicht mehr stören.

Die Schleifvorrichtung gewährleistet in Verbindung mit der sich anschließenden Reinigungsvorrichtung einen störungsfreien Kalandrierablauf. Besonders vorteilhaft ist dabei, daß bei der Anordnung mit dem Schleifband als Schleifmittel dieses während des kontinuierlichen Betriebs wirkungsvoll gereinigt werden kann. Dabei können durch den Einsatz sehr feinkörniger Schleifschichten niedrige Rauhigkeitswerte der Oberfläche der Aufzeichnungsschicht erreicht werden, so daß deren Oberflächeneigenschaften im Endergebnis nach dem Kalandrieren gegenüber dem mit den bisher üblichen Bearbeitungseinrichtungen Erzielbaren wesentlich verbessert sind.

Die Vorrichtung nach der Erfindung ist nachfolgend anhand von in den Zeichnungen dargestellten Ausführungsbeispielen näher erläutert. Es zeigt

Fig. 1 die Vorrichtung mit Schleifband in der Gesamtansicht,

Fig. 2 die Vorrichtung mit Schleifrolle in einer Teilansicht,

Fig. 3 einen Ausschnitt der Rollenoberfläche mit Lamellen.

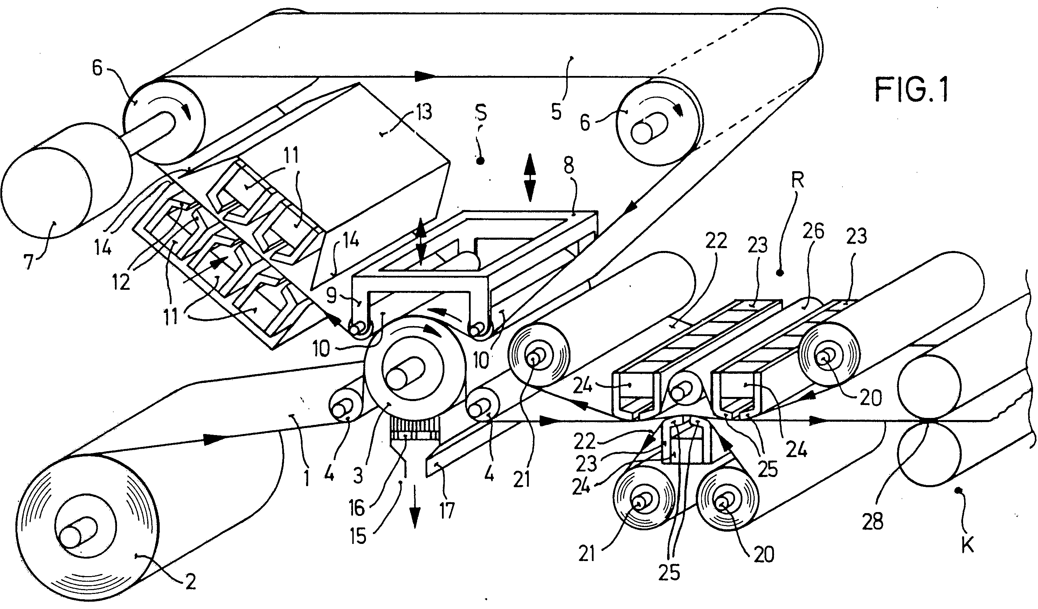

Die Vorrichtung besteht aus den ablauftechnisch aneinandergereihten Einrichtungen S, R, K zum Schleifen, Reinigen und Kalandrieren der mit einer Magnetschicht versehenen Folienbahn. Die Folienbahn 1 wird von einer Vorratsrolle 2 direkt von der Auftragsvorrichtung für die Magnetschicht einer drehbar gelagerten Stützwalze 3 der Schleifvorrichtung S zugeführt und dabei mit Hilfe der Umlenkrollen 4 mit einem Umschlingungswinkel zwischen 90 und 270° gegen die Stützwalze gedrückt (Fig. 1). Die Aufzeichnungsschicht befindet sich auf der Stützwalze 3 abgekehrten Seite der Folienbahn.

Über die Stützwalze 3 ist ein Schleifband 5 bekannter Art mit seiner der Folienbahn 1 zugewandten Schleifschicht (Körnung vorzugsweise zwischen 3 und 20 µm) über zwei Umlenkrollen 6 endlos geführt, von denen eine mit einem elektromotorischen Antrieb 7 verbunden ist. Ein zu Stützwalze 3 bewegbarer Rahmen 8 trägt an Vorsprüngen 9 zwei zur Stützwalze 3 symmetrisch und achsparallel angeordnete Andruckrollen 10, mit denen das Schleifband 5 mit einer durch die Höhenlage des Rahmens 8 einstellbaren Umschlingung zum Schleifen gegen die Aufzeichnungsschicht der Folienbahn gedrückt wird. Folienbahn und Schleifband laufen dabei vorzugsweise in zueinander entgegengesetzten Richtungen, wobei die Relativgeschwindigkeit vorzugsweise größer als 3 m/sec ist.

Das Schleifband durchläuft nach dem Kontakt mit der Folienbahn eine Kaskade von beidseitig des Schleifbandes angeordneten Magneten 11, deren Polschuhe 12 über die gesamte Breite des Schleifbandes sich erstreckende Luftspalte bilden, wobei zwischen den Polschuhen 12 und den Schleifbandoberflächen keine Berührung stattfindet. Vorzugsweise werden Dauermagnete verwendet, selbstverständlich können auch Elektromagnete eingesetzt werden. Die Polschuhe bestehen aus weichmagnetischem Stahl. Das von den Magneten 11 ausgehende Kraftfeld zieht den am Schleifband haftenden, magnetisierbaren Schleifstaub von der Schleifbandoberfläche ab, so daß das Schleifband vom Schleifstaub, der sich dabei hauptsächlich im Luftspalt an den Polschuhen 12 ansammelt, befreit wird. Da der Schleifstaub vorwiegend an der Schliefschicht haftet, sind dieser Seite des Schleifbandes 5 mehr Magnete 11 zugeordnet als der Schleifbandrückseite. In bestimmten Zeitabständen wird der sich an den Polschuhen ansammelnde Schleifstaub entfernt, z. B. mit Hilfe eines starken Preßluftstrahls. Die Magnete 11 sind von einem Gehäuse 13 umschlossen, damit beim Abblasen der Polschuhe der Schleifstaub nicht in die Umgebung gelangen, sondern in den Ansaugstutzen einer in der Zeichnung nicht sichtbaren Absaugleitung im Bereich der Stirnseite der Magnete hinter dem Gehäuse gelenkt werden kann. Aus dem gleichen Grunde sind an der Ein- und Auslaufseite der Magnetanordnungen für das Schleifband an den sich gegenüberstehenden Gehäusewänden Dichtleisten 14 angebracht.

Anstelle der Magnete können selbstverständlich auch mechanische Reinigungseinrichtungen, wie Bürsten oder aber auch Düsenanordnungen zum Luft- oder Flüssigkeitsbespülen eingesetzt werden.

Die Stützwalze 3 ist mit einem glatt überschliffenen Belag versehen, beispielsweise aus Polyurethankautschuk, welcher der Erhöhung der Betriebssicherheit und der Verminderung von zu großen Zugkräften auf die Folienbahn sowie der Verhinderung von Kratzern durch Staub- oder Schleifkörner dient. Führt man wie in vorliegender Ausführungsform das Schleifband 5 mit elastischem Andruck gegen die Stützwalze 3, so kann sie mit einer feinstbearbeiteten harten Stahl- oder Chromoberfläche versehen werden. In diesem Fall sind die Umlenkwellen 4 mit einem elastischen Belag versehen und werden mit einem gewissen Andruck gegen die Stützwalze 3 gedrückt. Die Stützwalze 3 ist über einen nicht dargestellten, vom Folienzug geregelten Elektromotor angetrieben. Dadurch werden unzulässige Zugbelastungen der Folienbahn im Bereich der Stützwalze 3 vermieden.

Zur Reinigung der Stützwalze 3 von Staub und Fremdpartikeln, die z. B. durch die Rückseite der Folienbahn 1 herangetragen werden können, ist unterhalb der Stützwalze eine Bürstenanordnung 15 mit einer perforierten Bürstengrundplatte 16 und einem die Bürsten und Grundplatte umschließenden Gehäuse 17 angebracht. Der sich in den Bürsten ansammelnde Staub wird mit Hilfe einer an das Gehäuse 17 angeschlossenen Unterdruckquelle (in der Zeichnung nicht dargestellt) durch die Perforationen der Grundplatte 16 hindurch abgesaugt. Bei einer Stützwalze mit harter Oberfläche kann die Bürstenanordnung auch durch eine Abstreifkante bzw. -fläche ersetzt werden.

Nach der Schleifvorrichtung S durchläuft die Folienbahn 1 mit der durch Schleifen bearbeiteten Magnetschicht eine Reinigungseinrichtung R, die aus beiderseits der Folienbahn von Vorrats- zu Aufnahmerollen 20, 21 laufenden Faservliesbändern 22 besteht. Umlenkkörper 23 sorgen für einen innigen Kontakt zwischen den Faservliesbändern und den Folienbahnoberflächen. Es ist vorteilhaft, die Umlenkkörper, wie oben für die Reinigung des Schleifbandes angegeben, aus Magneten 24 mit Polschuhen 25 aufzubauen. Die Reinigungswirkung wird dadurch verstärkt, da der magnetisierbare Schleifstaub durch die magnetischen Feldkräfte in das Faservliesband gezogen wird. Eine derartige Reinigungsvorrichtung ist in der Europäischen Patentanmeldung 79 100 083, Veröffentlichungs-Nr. 3292, beschrieben. Zur besseren Führung des Faservliesbandes 22 und zur Erhöhung der Andruckkräfte ist zwischen den beiden Umlenkkörpern 23 auf der Schichtseite der Folienbahn eine Umlenkrolle 26 vorgesehen. Für die unbearbeitete Rückseite der Folienbahn ist ein einmaliger Kontakt mit dem Faservliesband ausreichend, während auf der Schichtseite der Folienbahn mindestens zwei Kontaktstellen vorhanden sein sollten. Zur Verbesserung der Reinigungswirkung kann die Reinigungseinrichtung in Richtung der Stützwalzenachse oszillieren.

Die Kombination aus Faservliesband und magnetischen Umlenkkörpern ist für den der Erfindung zugrunde liegenden Zweck besonders vorteilhaft, es können selbstverständlich aber auch andere bekannte Reinigungsmittel, die hinsichtlich des geforderten Bearbeitungsergebnisses förderlich sind, verwendet werden.

An die Reinigungseinrichtung R schließt sich in Laufrichtung der Folienbahn 1 ein Kalander K herkömmlicher Bauart an, durch den die geschliffene Magnetschicht geglättet und verdichtet wird. Es ist zweckmäßig, Kalanderwalzenanordnungen mit mindestens 2 Walzenspalten 28 einzusetzen, wobei der Liniendruck zwischen 500 und 3500 N/cm, vorzugsweise zwischen 1500 und 2500 N/cm liegen sollte. Im Versuchsbetrieb hat sich gezeigt, daß nach dem Kalandrieren die vorher geschliffene und gereinigte Magnetschicht eine Oberflächenrauhigkeit unter 0,1 μm aufwies.

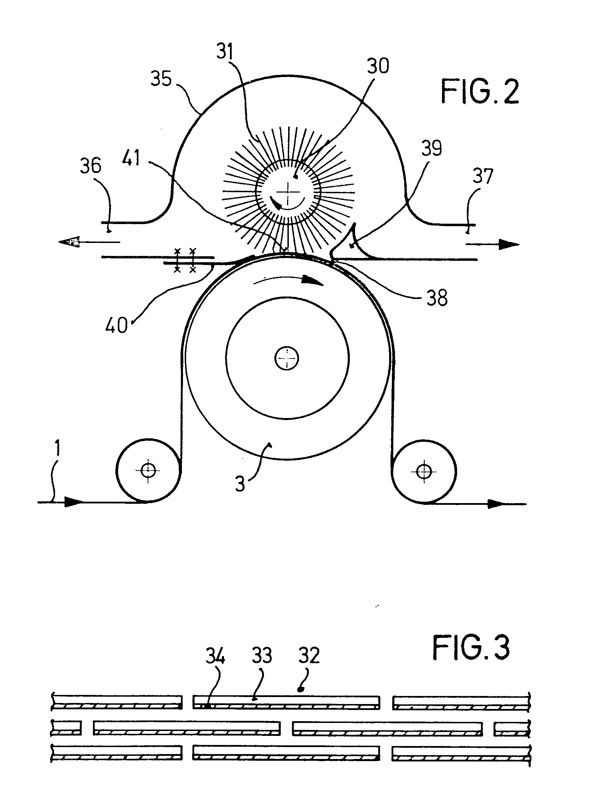

Eine weitere vorteilhafte Ausgestaltung der Erfindung stellt die in Fig. 2 dargestellte Schleifvorrichtung dar. Das Abschleifen und Einebnen der Magnetschicht der Folienbahn 1 wird durch eine Rolle 30 durchgeführt (Kontaktstelle 41).

Diese kann als handelsübliche rotationssymmetrische Bürste mit Borsten 31 aus Metall oder Kunststofäden besetzt sein, in die ihrerseits kleinste Schleifpartikeln wie Korund eingebettet sein können. Es ist auch ein lamellenartiger Aufbau aus, wie in Fig. 3 dargestellt, radial zur Rollenachse und versetzt zueinander angeordneten Schleiflamellen 32 vorstellbar.

Die Schleiflamellen 32 bestehen üblicherweise aus einem Träger 33 aus Gewebe, Kunststoff-Folie oder Vlies mit einer Schleifauflage 34, bei der in ein Bindemittel Korund oder andere Schleifpartikel eingebettet sind. Die Rolle 30 wird durch einen nicht dargestellten Elektromotor angetrieben. Zum Schutz gegen nach außen dringenden Schleifstaub ist die Schleifrolle von einem Gehäuse 35 umgeben, das mit zwei Ausgängen 36 und 37 an ein Sauggebläse (zeichnerisch nicht dargestellt) angeschlossen ist. Die Saugluft tritt hauptsächlich durch den Spalt 38 zwischen einem Luftumlenkteil 39 und der Stützwalze 3 ein. Zur besseren Abdichtung gegen den Folienbahneinlauf ist gegenüber dem Luftumlenkteil 39 ein dünnes Abdichtrakel 40 am Gehäuse 35 angebracht, das mit leichtem Druck an der Schichtoberfläche anliegt und dadurch verhindert, daß Schleifstaub durch die Zentrifugalkräfte der Rolle 30 nach außen geschleudert wird. Die Rolle 30 und das Rakel können in axialer Richtung oszillieren.

Als Relativgeschwindigkeiten zwischen der Rolle 30 und der Folienbahn 1 werden je nach gewünschter Abtragsleistung und abhängig von der Magnetschicht vorzugsweise Geschwindigkeiten > 3 m/sec gewählt. Die Körnung der Schleiflamellen 32 beträgt vorzugsweise 3 bis 20 µm.

Wie bei der Anordnung nach Fig. 1 schließt sich an die vorstehend beschriebene Schleifvorrichtung die Reinigungseinrichtung (R) und die Kalanderwalzenanordnung (K) an.

**Patentansprüche**

1. Vorrichtung zum Glätten der Oberfläche von magnetischen Aufzeichnungsträgern mit mehreren, aufeinanderfolgenden Oberflächenbehandlungen in einem Arbeitsgang, gekennzeichnet durch

— eine Schleifvorrichtung (S), bestehend aus einer drehbar gelagerten Stützwalze (3) für die Trägerbahn (1), einem darüber angeordneten Schleifmittel (5, 31) sowie aus Umlenkrollen (4, 6) und Einrichtungen zum fortlaufenden Bewegen der Trägerbahn und des Schleifmittels in zueinander entgegengesetzten Richtungen,

— eine an die Schleifvorrichtung sich anschließende Reinigungseinrichtung (R), bestehend aus einem umspulbaren Faservliesband (22) und mindestens einem Umlenkkörper (23) zum Herstellen der Oberflächenberührung zwischen Trägerbahn und Faservliesband,

— eine an die Reinigungseinrichtung sich anschließende Kalanderwalzenanordnung (K) mit mindestens einem Walzenspalt (28) für die geschliffene und vom Schleifstaub befreite Trägerbahn (1).

2. Vorrichtung nach Anspruch 1, dadurch gekennzeichnet, daß das Schleifmittel ein endlos geführtes Schleifband (5) ist, das mittels zweier zur Stützwalze (3) parallel und symmetrisch angeordneter und in einem Rahmen (8) drehbar gehaltener Andruckrollen (10) an die auf der Stützwalze abgestützte Schichtoberfläche andrückbar ist, und daß sich unmittelbar über den beiden Oberflächen des Schleifbandes über dessen gesamte Breite mindestens ein Luftspalt magnetischer Pole (12) erstreckt.

3. Vorrichtung nach Anspruch 1, dadurch gekennzeichnet, daß der Walzenmantel der Stützwalze (3) in ihrer gesamten Breite mit einer Bürstenanordnung (15) in Berührung steht und der Bürstengrund (16) mit einer Unterdruckkammer verbunden ist.

4. Vorrichtung nach Anspruch 1, dadurch gekennzeichnet, daß das Schleifmittel eine Rolle (30) ist, die in Form einer rotationssymmetrischen Bürste mit Borsten (31) bzw. Lamellen (32) ausgestattet ist, wobei die Rolle von einem Gehäuse (35) umgeben ist, das zur Erzeugung eines geführten Luftstromes mit mindestens einem Einlaß (38) und mindestens einem Auslaß (36) versehen ist.

5. Vorrichtung nach Anspruch 4, dadurch gekennzeichnet, daß der Einlaß (38) für den Luftstrom in Bewegungsrichtung der Trägerbahn (1) nach der Kontaktstelle (41) mit der Rolle (30) unmittelbar an der Oberfläche der Stützwalze (3) vorbeigeführt ist.

6. Vorrichtung nach Anspruch 4 und 5, dadurch gekennzeichnet, daß der Einlaß (38) oder der Auslaß (36) mit einem Gebläse in Verbindung steht.

**Claims**

1. An Apparatus for smoothing the surface of magnetic recording media, comprising a plurality of consecutive surface treatments, in a single operation, characterized by

— a burnishing unit (S), consisting of a rotatably mounted backing roller (3) for the coated web (1), an abrasive element (5, 31) located above this roller, and guide rollers (4, 6) and devices for causing the coated web and the abrasive element to move continuously in opposite directions,

— a cleaning unit (R), downstream of the burnishing unit, consisting of a reelable web of nonwoven fabric (22) and at least one guider member (23) for causing surface contact between the coated web and the web of nonwoven fabric, and

— a calender unit (K), downstream of the cleaning unit, possessing at least one nip for the coated web which has been burnished and freed abrasive dust.

2. An apparatus as claimed in claim 1, characterized in that the abrasive element is an endless abrasive belt (5) which can be urged against the recording layer surface, supported on the backing roller, by means of two biassing rollers (10) which are arranged parallel to, and symmetrically with respect to, the backing roller (3), and are rotatably mounted in a frame (8), and that at least one air gap formed surface of the abrasive belt, over the entire width of the latter.

3. An apparatus as claimed in claim 1, characterized in that the support surface of the backing roller (3) is in contact, over its entire width, with brush means (15), and the back (16) of the brush means is connected to a source of vacuum.

4. An apparatus as claimed in claim 1, characterized in that the abrasive element is a rotary member (30) provided with bristles (31) or lamellae (32), the rotary member being surrounded by a housing (35) which is provided with at least one inlet (38) and at least one outlet (36) for setting up a directional stream of air.

5. An apparatus as claimed in claim 4, characterized in that the inlet (38) for the stream of air is arranged after the point of contact (41) of the rotary member (30) with the coated web (1) and in close proximity to the surface of the backing roller (3).

6. An apparatus as claimed in claims 4 and 5, characterized in that the inlet (38) or outlet (36) is connected to a fan.

**Revendications**

1. Appareil pour le lissage de la surface de supports d'enregistrement magnétiques avec plusieurs traitements de surface successifs en une seule phase de travail, caractérisé par:

— un dispositif de ponçage (S) constitué par un cylindre d'appui (3), monté rotatif, pour la bande-support (1), un agent de ponçage (5, 31) dispoé au-dessus, ainsi que par des galets de renvoi (4, 6) et des moyens d'entraînement en continu de la bande-support et de l'agent de ponçage, en direction-sopposées l'une à l'autre,

— des moyens de nettoyage (R) faisant immédiatement suite au dispositif de ponçage, constitués d'un voile en bande (22) rebobinable et d'au moins un corps de guidage (23) pour assurer le contact en surface entre la bande-support et le voile en bande,

— un ensemble de cylindres de calandrage (K) faisant immédiatement suite aux moyens de nettoyage et comportant au moins un interstice (28) entre cylindres pour la bande-support (1) poncée et débarassée de la poussière de ponçage.

2. Appareil selon la revendication 1, caractérisé par le fait que l'agent de ponçage est une bande de ponçage (5) guidée sans fin, qui est applicable contre la surface de la couche appuyée sur le cylindre d'appui, grâce à deux galets presseurs (10) disposés de façon parallèle et symétrique et montés rotatifs, dans un cadre (8), et qu'au moins un entrefer entre pôles magnétiques (12) s'étend directement au-dessus des deux faces de la bande de ponçage sur toute sa largeur.

3. Appareil selon la revendication 1, caractérisé par le fait que la surface périphérique du cylindre d'appui (3) est en contact, sur toute sa largeur, avec un ensemble de brosses (15) et la base (16) des brosses est reliée à une chambre sous vide.

4. Appareil selon la revendication 1, caractérisé par le fait que l'agent de ponçage est un rouleau (30), agencé en forme de brosse de révolution à poils (31) ou lamelles (32), ledit rouleau étant entouré d'un carter (35) qui est muni, pour obtenir un courant d'air guidé, d'au moins une entrée (38) et d'au moins une sortie (36).

5. Appareil selon la revendication 4, caractérisé par le fait que l'entrée (38) pour le courant d'air passe directement à la surface du cylindre d'appui (3), en aval de la zone de contact (41) avec le rouleau (30), vu dans le sens de déplacement de la bande-support (1).

6. Appareil selon l'une des revendications 4 et 5, caractérisé par le fait que l'entrée (38), ou la sortie (36) est en communication avec une soufflerie.

FIG.1

# FIG.2

# FIG.3